# EUROPEAN PATENT APPLICATION

(11) **EP 1 096 414 A2**
(43) Date of publication of application: **02.05.2001**
(21) Application number: 00308827.5
(22) Date of filing: 06.10.2000
(51) Int. Cl.: G06K 7/08

(54) **IC card reader**

(30) Priority: 08.10.1999 JP 28834499; 13.10.1999 JP 29090999; 27.12.1999 JP 36981899
(71) Applicant: SANKYO SEIKI MFG. CO. LTD., Suwa-gun, Nagano-ken 393-8511 (JP)
(72) Inventor: Shiomi, Toshiro, c/o SANKYO SEIKI MFG. CO., LTD., Nagano-ken 393-8511 (JP); Hirasawa, Kenji, c/o SANKYO SEIKI MFG. CO., LTD., Nagano-ken 393-8511 (JP); Kazutoshi, Ishikawa, c/o SANKYO SEIKI MFG.CO.,LTD., Nagano-ken 393-8511 (JP)
(74) Representative: Holmes, Matthew Peter

(57) **Abstract**

An IC card reader includes a card reader communication coil for communicating with a non-contact type communication coil of an IC card. The IC card reader has a card transfer mechanism for transferring the IC card within a main body of the IC card reader. The IC card reader has a position adjusting mechanism that is driven by a position adjusting driver device for adjusting positions of at least one of the IC card and the card reader communication coil within the main body of the IC card reader. A position adjusting control device controls the position adjusting driver device and the position adjusting mechanism and determines a position that establishes an optimum communication quality in a communication between the IC card and the IC card reader based on an output signal from the card reader communication coil.

## Description

### BACKGROUND OF THE INVENTION

### 1. Field of the Invention

The present invention relates to IC card readers. More particularly, the present invention relates to an IC card reader that can communicate data with a non-contact type IC card. It is noted that an IC card reader in accordance with the present invention also includes an IC card reader and writer.

### 2. Description of Related Art

In recent years, efforts have been made to put non-contact type IC cards to practical use. Typically, a non-contact type IC card has a communication coil to form a magnetic coupling with a communication coil of a card reader, such that a non·contact data communication is established between the IC card and the card reader. A non-contact type IC card reader uses such a non-contact type IC card described above. The communication coil of the non-contact type IC card reader forms a magnetic coupling with the non-contact type communication coil of the IC card, to thereby supply power and perform a data communication.

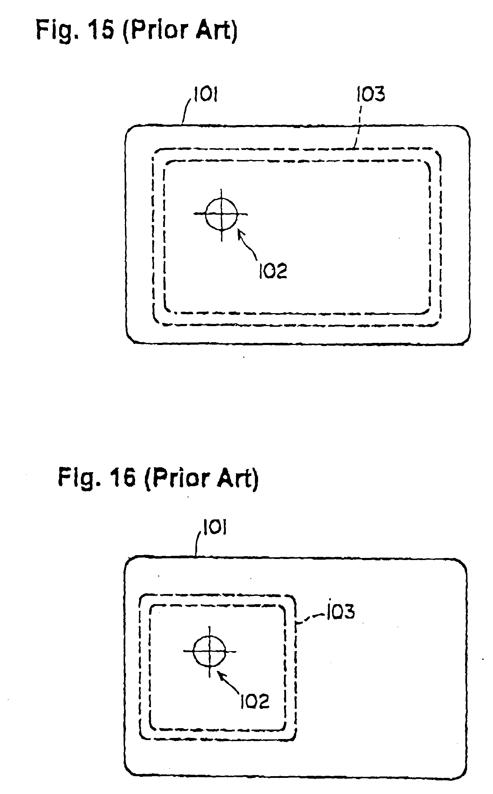

According to the ISO (International Standard Organization) standard with respect to a non-contact type IC card reader, as shown in Fig. 15, for example, a card 101 is specified to have a magnetic coupling designated position 102 that is a reference region of magnetic coupling of the card 101. A conventional card reader under the ISO standard stops the card 101 at a predetermined position using a stopper and a position detector in order to form a magnetic coupling including the magnetic coupling designated position 102, such that the card 101 is positioned properly with respect to the card reader communication coil.

However, the magnetic coupling designated position 102 defined by the ISO standard is an approximate position and does not serve as a reference position where the maximum effect of the magnetic coupling is attained.

For example, non-contact type communication coils 103 enclosed in the cards 101 are different in shape, position and size from one manufacturer to another or from one card type to another, as shown in Figs. 15 and 16. However, the magnetic coupling designated position 102 under the ISO standard is not changed according to the types of the card 101, and therefore may be located away from a position where the maximum effect of the magnetic coupling is attained.

Moreover, the non-contact type communication within the housing of the card reader is subject to various restrictions that may exist in the housing of the card reader. Therefore, it is difficult to maintain a required magnetic coupling condition, which leads to poor communication quality in the power supply and the like and therefore results in data communication errors.

Accordingly, it is important to provide a non-contact type IC card reader that secures a position that provides a high communication quality for each individual card, to thereby improve the communication quality, and that properly copes with communication errors.

Also, an IC card reader needs to identify a card that is inserted in the IC card reader by obtaining information such as the type of the card, the serial number and the like. This procedure is called an IC card activation, and is a communication processing procedure that is initially conducted. Different IC card activation processes are employed for a contact type IC card and a non-contact type IC card.

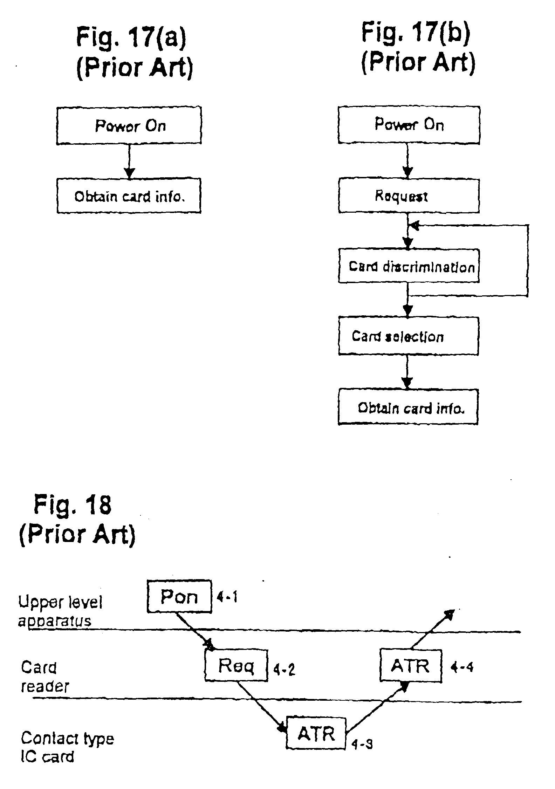

First, a conventional IC card activation process for a contact type IC card is described with reference to Figs. 17(a) and 18. As shown in Fig. 18, a card reader is implemented in an upper level apparatus such as an ID recognition terminal, a banking transaction terminal or the like, and performs data communications with the upper level apparatus. The contact type IC card can immediately provide card information when the upper level apparatus is powered on, as shown in Fig. 17(a). At this moment, a command-response flow takes place as shown in Fig. 18.

Referring to Fig. 18, when the upper level apparatus issues an activation command (i.e., a power-on command Pon) to the card reader, the card reader issues to the contact type IC card a hardware reset request Req. The contact-type IC card returns an answer-to-reset ATR as an activation response to the card reader, and the card reader transfer the activation response to the upper level apparatus as it is. As a result, an activation of the non-contact type IC is performed. An answer-to-reset ATR is also issued in the case of a non·contact type communication. However, the answer-to-reset ATR issued in the case of the contact type communication and the answer-to-reset ATR issued in the case of the non-contact type communication are different from each other.

Next, an activation of a non-contact type IC card is described. Referring to Fig. 17(b), when the upper level apparatus issues an activation command (a Power-On command) to the card reader, the card reader converts the activation command to a request command Req, and issues the same to the non-contact type IC card. In this instance, there may be a plurality of non-contact type IC cards present in a communication region within the card reader. Therefore, a card discrimination process is conducted. The card discrimination process is repeated in the number of the cards that are present in the communication region. Next, a specified card is selected among a plurality of the discriminated cards, and a specified serial number is added to the specified card. In this manner, card information is obtained. The card information is returned to the upper level apparatus to thereby activate the non-contact type IC card.

In the activation of the non-contact type IC card, the card discrimination process is executed in the number of the cards that are present in the communication region as described above. The card discrimination process is required to accomplish functions for the plurality of non·contact type IC cards that are present within the communication region.

When one card reader is used to handle contact type IC cards and non-contact type IC cards, functions for non·contact type IC cards may be added to a card reader for contact-type IC cards. However, although such a card reader takes one card at a time, a lengthy activation process as shown in Fig. 17(b) may need to be performed. The activation process eventually provides card information that identifies the card, which is the same result obtained in much fewer steps in the case of the activation of a contact-type IC card. Accordingly, when an IC card reader is intended to handle contact type IC cards and non-contact type IC cards, an upper level apparatus in which such a card reader is implemented needs to have additional processing functions to execute the lengthy activation process.

Therefore, when a non-contact type IC card reader is intended to handle both of contact type IC cards and non-contact type IC cards, it is important that the activation of non-contact type IC cards and the activation of contact type IC cards become to be equivalent to each other as viewed from an upper level apparatus in which the non-contact type IC card reader is implemented.

Furthermore, a non-contact type IC card reader may preferably have a structure that can handle contact type IC cards. With a contact type IC card, a data communication is accomplished by mechanically connecting or contacting a contact point provided on the card reader and an electrode provided on the card. With a non-contact type IC card, a data communication is accomplished by magnetically coupling a coil provided in the card reader and a coil provided in the card.

A non-contact type IC card generally features a high communication speed and a very short card processing time. However, in a conventional card reader that handles both of non-contact type IC cards and contact type IC cards, two card readers for non-contact type IC cards and contact type IC cards are disposed next to each other. A non-contact type IC card or a contact type IC card is moved to a processing position of a corresponding one of the card readers. Therefore, when an IC card is provided with two functions as a contact-type IC card and a non-contact type IC card, and information needs to be transferred through both of the functions, the IC card needs to be moved to either of the card readers as may be needed. Accordingly, there is a problem in that a non-contact type IC card cannot fully demonstrate its feature, i.e., the short card processing time.

### SUMMARY OF THE INVENTION

The present invention has been made in view of the problems of the conventional art described above. It is a primary object of the present invention to provide an IC card reader that secures, when non-contact type IC cards are used, a high quality magnetic coupling position suited for each individual IC card, to thereby improve the communication quality, and that properly copes with communication errors.

Also, it is a second object of the present invention to provide a card reader that automatically performs an activation of a non-contact type IC card, such that the activation of the non-contact type IC card, i.e., the communication processing procedure to be initially executed for the non-contact type IC card, is equivalent to the activation of a contact type IC card as viewed from an upper level apparatus, and an activation result that is similar to an activation result obtained in the case of a non-contact type IC card is provided to the upper level apparatus.

Moreover, it is a third object of the present invention to provide an IC card reader that handles two communication methods for contact-type IC cards and non-contact type IC cards. Moreover, in one feature of the third embodiment of the present invention, the IC card reader can process an IC card having the two communication functions as a contact-type IC card and a non-contact type IC card at one location or at multiple locations separated by a minimal distance so that the IC card is moved with a minimal distance.

Other features and advantages of the invention will be apparent from the following detailed description, taken in conjunction with the accompanying drawings that illustrate, by way of example, various features of embodiments of the invention.

### BRIEF DESCRIPTION OF THE DRAWINGS

Fig. 1 is a plan view in part of an IC card reader near a card communication position.

Fig. 2 schematically shows a general structure of an IC card reader.

Fig. 3 is a plan view in part of an IC card reader and a card reader communication coil.

Fig. 4 schematically shows a structure of a card reader communication coil and a position adjusting control device in accordance with one embodiment of the present invention.

Fig. 5 is a flow diagram of a position adjustment procedure in accordance with one embodiment of the present invention.

Fig. 6 is a flow diagram of a position adjustment procedure in accordance with another embodiment of the present invention.

Fig. 7 is a functional block diagram of a process memory section of an IC card reader in accordance with another embodiment of the present invention.

Fig. 8 shows a command-response flow of an example of an IC card activation operation by a IC card reader in accordance with one embodiment of the present invention.

Fig. 9 is a perspective view of an IC card in accordance with another embodiment of the present invention.

Fig. 10 is a perspective view of a contact type contact block of an IC card reader in accordance with one embodiment of the present invention.

Fig. 11 is a side view of a non-contact type communication coil of an IC card reader in accordance with one embodiment of the present invention.

Fig. 12 is a side view of a non-contact type communication coil in accordance with another embodiment of the present invention.

Fig. 13 is a side view of a transfer path used in an IC card reader in accordance with one embodiment of the present invention.

Fig. 14 is a side view of a transfer path used in an IC card reader in accordance with another embodiment of the present invention.

Fig. 15 is plan view of one example of a conventional card having a magnetic coupling designated position.

Fig. 16 is plan view of another example of a conventional card having a magnetic coupling designated position.

Fig. 17(a) is a flow chart of an example of a conventional activation operation of an IC card reader for a contact type IC card.

Fig. 17(b) is a flow chart of an example of a conventional activation operation of an IC card reader for a non-contact type IC card.

Fig. 18 is a flow chart of one example of a conventional command and response process in an activation operation for a contact type IC card.

### DESCRIPTION OF PREFERRED EMBODIMENTS

IC card readers in accordance with embodiments of the present invention will be described below with reference to the accompanying drawings.

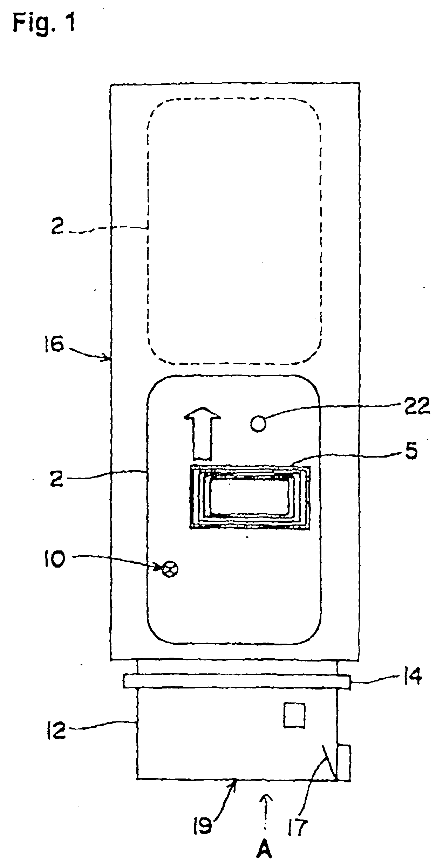

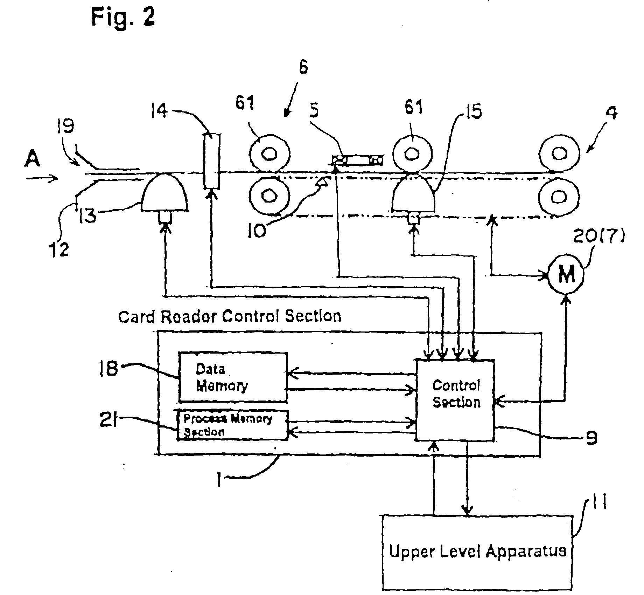

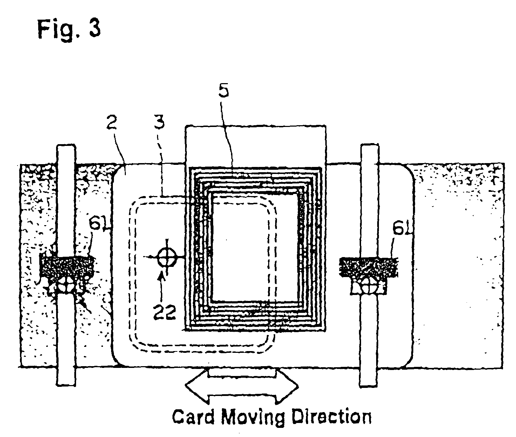

Figs. 1 - 6 shows an IC card reader in accordance with one embodiment of the present invention. When non-contact type IC cards are used, the IC card reader can secure a high quality magnetic coupling position suited for each individual IC card. As shown in Fig. 2, the IC card reader has a card transfer mechanism 4 that transfers an IC card 2 and a card reader communication coil 5. The IC card 2 is typically equipped with a non-contact type communication coil 3 shown in Fig. 3. The IC card reader communicates data with the IC card 2, using the card reader communication coil 5.

The IC card reader has a position adjusting mechanism 6, a position adjusting driver device 7 and a position adjusting control device 8. The position adjusting mechanism 6 moves one of the IC card 2 equipped with the non-contact type communication coil 3 and the card reader communication coil 5. The position adjusting driver device 7 drives the position adjusting mechanism 6. The position adjusting control device 8 controls the position adjusting driver device 7 and the position adjusting mechanism 6 and determines a position with a high communication quality based on an output signal from the card reader communication coil 5.

A structure of the IC card reader will be described below. As shown in Figs. 1 and 2, a gate section 12 is mounted to a card reader apparatus main body 16 that includes the card transfer mechanism 4 for transferring the IC card 2. The gate section 12 has a card insertion aperture 19 through which the IC card 2 is inserted in a direction indicated by an arrow A. A shutter mechanism 14 is disposed between the card insertion aperture 19 and the apparatus main body 16. The shutter mechanism 14 has a known shutter that regulates the transportation of the IC card. A card reader communication coil 5 is disposed within the card reader apparatus main body 16. A data communication is established by a magnetic coupling between the card reader communication coil 5 and the non-contact type communication coil 3 on the IC card 2.

A switch 17 that functions as a card detection member is provided between the card insertion aperture 19 and the shutter mechanism 14 to detect whether or not the IC card 2 is inserted in the gate section 12. When the switch 17 detects the insertion of the IC card 2, the shutter of the shutter mechanism 14 is moved from a card passage and opened to allow the IC card 2 to be taken in the apparatus. The IC card 2 that is inserted in the apparatus main body 16 passes a non·contact type communication region formed by the card reader communication coil 5, and can move to a position indicated by a broken line in Fig. 1.

In the embodiment described above, when the switch 17 detects the insertion of the IC card 2, the shutter of the shutter mechanism 14 is opened to thereby allow the IC card 2 to be taken into the IC card reader apparatus. In another embodiment, the card reader communication coil 5 or an independent communication coil different from the card reader communication coil 5 may be provided before the shutter in the gate section 12. When the communication coil detects that the IC card 2 is capable of communication, the shutter may be opened to allow the IC card to be taken into the IC card reader apparatus. In this instance, when the switch 17 detects the insertion of the IC card 2, the communication coil described above may preferably be used for communication. If the communication coil is provided in the gate section 12, the gate section 12 may preferably be covered by an electromagnetic shield member to shut out electromagnetic waves.

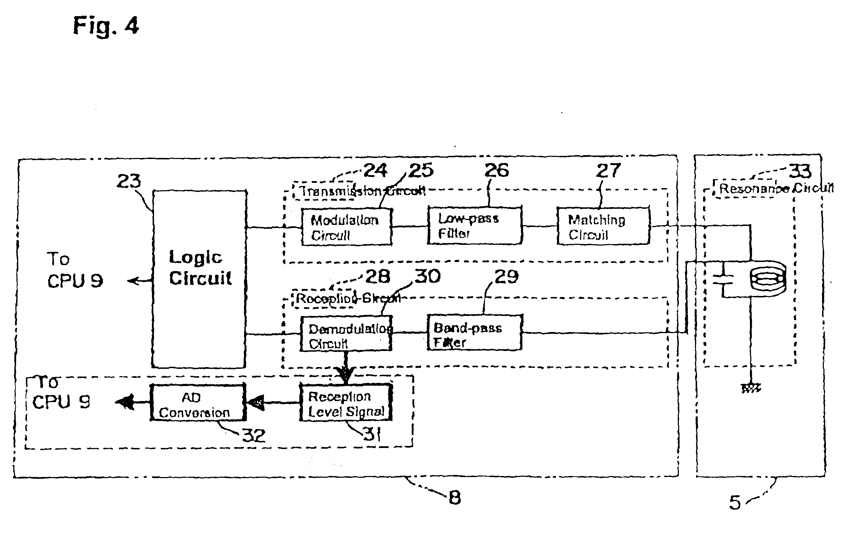

Fig. 2 shows a control system of the IC card reader of the present invention. An IC card reader control section 1 includes a control section (CPU) 9, a data memory 18 and a process memory section 21. The control section 9 connects to external apparatuses such as a card reader communication coil 5, a sensor 10, an upper level apparatus 11, a pre-head 13, a read/write (R/W) head 15 and a monitor 20. Also, a position adjusting control device 8 (see Fig. 4, for example) is formed within the control section 9. The upper level apparatus 11 includes, for example, a bank transaction terminal, a transportation facility reload terminal and the like that uses IC card readers.

The IC card reader is equipped with the card transfer mechanism 4 that is formed from card driving rollers 61 that receive and transport the IC card 2. A motor 20 provides a driving source to drive the card transfer mechanism 4. The sensor 10 is a position detection sensor that detects positions of the card 2. The card reader communication coil 5 functions to communicate data with the IC card 2 when it is a non-contact type IC card.

In accordance with the embodiment of the present invention, the IC card 2 is transferred by the card transfer mechanism 4 from the card insertion aperture 19 to a card stop position at which a data communication is performed between the IC card 2 and the card reader communication coil 5. When the IC card 2 stops at the card stop position, a data communication is performed between the non-contact type communication coil 3 of the IC card 2 and the card reader communication coil 5. A resultant data of the communication is stored in the data memory 18. When the upper level apparatus 11 issues a data communication request, the data is sent out from the data memory 18.

The IC card reader 1 of the present embodiment adjusts stop positions of the IC card 2. An embodiment of a structure that adjusts stop positions of the IC card 2 to improve the communication quality is described with reference to Figs. 3 and 4.

The IC card 2 is provided with a magnetic coupling designated position 22 that is designated by the ISO standard, as shown in Fig. 3. The IC card 2 is positioned based on the magnetic coupling designated position 22 as a reference communication position. In other words, the IC card 2 is positioned such that the magnetic coupling designated position 22 is located within the card reader communication coil 5. In addition to the magnetic coupling designated position 22 (the reference communication position), a further positional adjustment for the IC card 2 is conducted to improve the communication quality between the non-contact type communication coil 3 and the card reader communication coil 5, in accordance with the embodiment of the present invention. The position adjustment is mainly performed by the position adjusting mechanism 6, the position adjusting driver device 7 and the position adjusting control device 8.

The position adjusting mechanism 6 moves either the IC card 2 or the card reader communication coil 5 to make a positional adjustment between the IC card 2 and the card reader communication coil 5 to improve the communication quality between the IC card 2 and the card reader communication coil 5. In accordance with the embodiment of the present invention, the card transfer mechanism 4 includes card-driving rollers 61. Among the card-driving rollers 61, one set of the card-driving rollers 61 that are located immediately before and after the data communication position as shown in Fig. 3 are also used as a part of the position adjusting mechanism 6. This set of the card-driving rollers 61 are used to move and adjust the position of the IC card 2. Also, the position adjusting mechanism 6 is driven by the position adjusting driver device 7, such as, for example, a motor. The position adjusting driver device 7 may be an independent device that exclusively drives the position adjusting mechanism 6. However, in a preferred embodiment, the motor 20 that drives the card transfer mechanism 4 may be commonly used for driving the position adjusting mechanism 6.

The position adjusting control device 8-controls the position adjusting driver device 7 and the position adjusting mechanism 6, and determines a position with a higher communication quality based on output signals from the position adjusting driver device 7 and the position adjusting mechanism 6. Fig. 4 shows one example of the position adjusting control device 8. The position adjusting control device 8 is provided within the control section 9. The position adjusting control device 8 includes a logic circuit 23, a transmission circuit 24 and a reception circuit 28, and is connected to the card reader communication coil 5 that includes a resonance circuit 33. The position adjusting control device 8 calls the IC card 2 through the card reader communication coil 5 and transmits and receives data. The transmission circuit 24 includes a modulation circuit 25, a low-pass filter 26 and a matching circuit 27. The reception circuit 28 includes a band-pass filter 29 and a demodulation circuit 30. The transmission circuit 24 and the reception circuit 28 are connected to other parts or circuit elements within the control section 9 through the logic circuit 23. Also, the position adjusting control device 8 may be provided with an AD convener 32, such that a reception level signal 31 outputted from the demodulation circuit 30 is A-to-D converted and transmitted to the other parts within the control section 9.

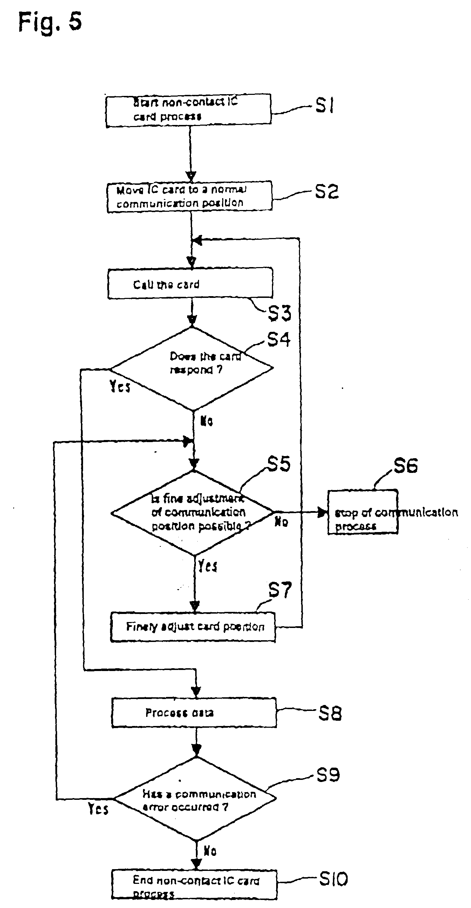

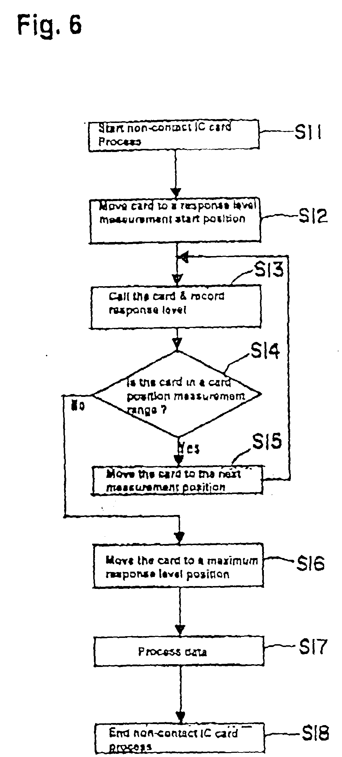

First and second embodiments of the present invention in which the IC card 2 is moved by the devices and the mechanisms described above to improve the communication quality are described below with reference to Figs. 5 and 6. The first embodiment of the present invention not only improves the communication quality but also takes a communication recovery measure when the IC card causes a communication error. Accordingly, a process that includes the communication recovery measure is described below.

In the embodiment shown in Fig. 5, when the process for the non-contact type IC card 2 starts (step 1), the IC card 2 is moved to and stopped at the reference communication position within the IC card reader, for example, a first communication position defined according to the magnetic coupling designated position 22 (step 2). The IC card 2 is called at the first communication position through the card reader communication coil 5 (step 3), to confirm a response from the IC card 2 (step 4). When it is confirmed that the response from the IC card 2 is at a specified level or above and normal, data communication and data processing are normally conducted between the card reader communication coil 5 and the non-contact type communication coil 3 of the IC card 2 (step 8).

On the other hand, in step 4, if a response from the IC card 2 is not confirmed, for example, when the response is below the specified level, a determination is made as to whether the IC card 2 is located in a communication position that can be finely adjusted (step 7), the IC card 2 is moved for its positional adjustment by a specified amount in a specified direction (step 7), and the IC card 2 is called again to confirm if a communication is established (step 3), whereby a communication recovery measure is conducted. It is noted that, in step 5, if a determination is made that the communication position cannot be finely adjusted, the communication process is determined to be abnormal and terminated.

In the fine adjustment step, the IC card 2 may be finely moved in one direction or alternately moved back and forth depending on a relative location between the card reader communication coil 5 are the IC card 2. When the IC card 2 is moved in one direction in a stepwise fashion in the fine adjustment step, the initial stop position of the IC card 2 (the first communication position) may be set at a location before an expected optimum communication position. Then, the IC card 2 is gradually moved in a stepwise fashion, while the IC card 2 may be called to confirm if the IC card provides a satisfactory response. When the IC card 2 is alternately, finely moved back and forth in the fine adjustment step, the initial stop position of the IC card 2 (the first communication position) may be set at an expected optimum communication position. Then, the IC card 2 is alternately moved back and forth by a specified amount from this initial position.

When the IC card 2 is moved from the initial stop position for the IC card 2 (the first communication position) to a second communication position by a specified amount, the IC card 2 is called again to confirm if there is a response (steps 3 and 4). If there is no response from the IC card 2, a routine for finely adjusting the communication position is repeated. On the other hand, if there is a response from the IC card 2, a data processing is executed (step 8), and succeeding steps for the IC card 2 are continued.

When the data is processed in step 8, a determination is made as to whether a communication error occurs (step 9). If an error has not occurred, a series of the steps and operations for the IC card 2 is completed (step 10). On the other hand, if an error has occurred, the process returns to step 5 again and the routine described above is repeated. Therefore, in the present embodiment, the process steps above can be repeated until a communication is successively established.

Next, the second embodiment shown in Fig. 6 is described. In the second embodiment, a process described below may be conducted before the IC card 2 is processed, to make possible a non-contact type communication with the maximum efficiency.

As shown in Fig. 6, when a process for the non-contact type IC card 2 is started (step 11), the IC card 2 is moved to a start position at which a measurement of a response level is conducted (step 12), and the IC card 2 is called and a level of response from the IC card 2 is recorded (step 13). In the present embodiment, in the step in which the IC card 2 is called and a level of response from the IC card 2 is recorded, a card reader command is issued to the IC card 2, and a response waveform of a response from the IC card 2 is detected, extracted and A-to-D converted. The number of detection of response levels is not particularly limited. However, it is noted that continuous response levels can be obtained with a higher number of outputs. Therefore, the frequency of the detection and the number of outputs are determined in consideration of the overall accuracy.

When one response level is recorded, a determination is made as to whether the IC card 2 is located in a measurement range where measurements can be conducted (step 14). If the IC card 2 is within the measurement range, the IC card 2 is moved by a specified amount to the next measurement position (step 15), and the step of detection, extraction and A-to-D conversion of a response waveform of a response from the IC card 2 is again performed, whereby the IC card 2 is called and a response level is stored (step 13).

It is noted that the measurement range for the IC card 2 in the embodiment described above is a range in which the magnetic coupling designated position 22 on the IC card 2 overlaps the card reader communication coil 5 in a direction in which the card is advanced, in other words, the magnetic coupling designated position 22 is within the card reader communication coil 5. Therefore, until the IC card 2 moves in a range in which the non-contact type communication coil 3 cannot communicate with the card reader communication coil 5, the steps of calling the IC card 2 and storing its response level (step 13) and moving the IC card 2 (step 15) arc repeated, and response levels corresponding to positions of the IC card 2 are successively recorded.

When a determination is made in step 14 that the IC card 2 is not within the measurement range, a communication position with the highest response level among the response levels so far recorded is detected, and the IC card 2 is moved to the communication position with the highest response level (step 16), the IC card 2 is processed (step 17), and the process is completed (step 18).

As described above, in accordance with the IC card reader of the present embodiment having the position adjusting mechanism 6, the position adjusting driver device 7 and the position adjusting control device 8, the communication position between the non-contact type communication coil 3 of the IC card 2 and the card reader communication coil 5 provided on the card reader can be adjusted. As a result, for a variety of IC cards, an optimum communication position can be individually provided for each of the IC cards within the IC card reader to thereby improve the communication quality.

In the embodiment described above, the IC card 2 is moved in the direction in which the card is advanced and its position is finely adjusted. However, in an alternative embodiment, the IC card 2 may be fixed at a location, and the card reader communication coil 5 may be moved for fine adjustments. In other words, at least one of the coils 3 and 5 that perform a non-contact type data communication may be moved to change the relative position between the coils 3 and 5, to thereby secure an optimum position where a high quality communication is attained.

Also, in the embodiment described above, the relative position between the non-contact type communication coil 3 and the card reader communication coil 5 in the card driving direction is described. In another embodiment, the relative position in a card width direction perpendicular to the card driving direction may also be changed. The relative position in the card width direction can be changed by the use of a known actuator that moves the card reader communication coil 5 in the card width direction. When the card reader communication coil 5 is moved, the card reader communication coil 5 may be formed from a plurality of coils. In this case, all of the plural coils may be moved, or specified ones of the plural coils may be moved to secure an optimum communication position.

Furthermore, in the embodiment described above, optimum communication positions for several different IC cards 2 to be handled by the IC card reader may preferably be designated in advance. In the communication recovery measure to recover a communication error, the card can be moved to one of these positions, such that the communication error can be recovered in a short time with a high probability.

Next, a non-contact type IC card reader in accordance with another embodiment of the present invention is described below. In the non-contact type IC card reader, an activation of a non-contact type IC card and an activation of a contact type IC card become to be equivalent as viewed from the upper level apparatus.

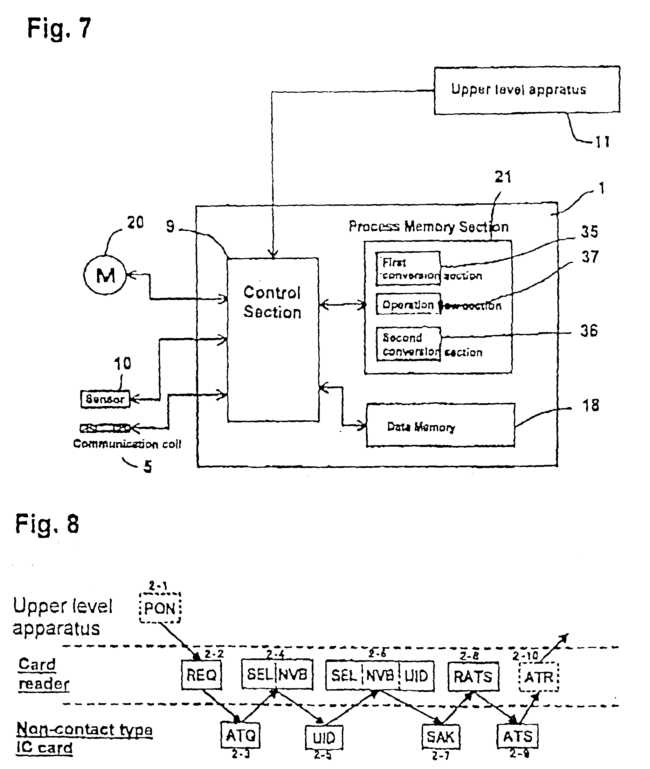

Fig. 7 shows a control system in an IC card reader. An activation of an IC card is described below with reference to Fig. 7.

The process memory section 21 includes a first conversion section 35, a second conversion section 36 and an operation flow section 37. The first conversion section 35 converts an activation command for activation of a non-contact type IC card provided from the upper level apparatus into an activation command for activation of a contact type IC card. The second conversion section 36 converts a response result for a non-contact type IC card into a format that is the same as the one for a contact type IC card. The operation flow section 37 stores a control program for the control section 9, and stores a communication process procedure to be initially executed for an IC card that has a non-contact type communication coil.

Fig. 8 shows an example of an activation of a non-contact type IC card by the control system thus constructed, in other words, a command-response procedure in a communication process to he initially executed. Referring to Fig. 8, in response to an activation command (PON) from an upper level apparatus 2-1, the card reader exchanges signals with the non-contact type IC card to perform steps 2-2 through 2-10, and returns signals to the upper level apparatus. One example of the steps 2-2 through 2-10 is described below.

In step 2-1, the upper level apparatus 11 issues an activation command PON (Power ON) to the card reader 16, which is the same activation command to be issued in the case of a contact type IC card.

In step 2-2, in response to the activation command from the upper level apparatus 11, the card reader 16 supplies power to the non-contact type IC card 2, converts the activation command into a request command REQ for a non-contact type IC card, and issues this request command REQ to the non-contact type IC card 2. The power supply is conducted by an electromagnetic coupling between the card reader communication coil 5 and the non-contact type communication coil 3 on the IC card, in a similar manner conducted for communicating signals.

In step 2-3, the non-contact type IC card 2 returns an answer-to-request ATQ to the card reader 16.

In step 2-4, the card reader 16 determines a card discrimination method based on the returned information. Then, the card reader 16 adds a number-of-valid-bit NVB that designates a code for card discrimination to a select SEL to define a card discrimination command, and issues the card discrimination command to the non-contact type IC card 2.

In step 2-5, since there is only one non-contact type IC card 2 that is present in the card reader 16, an interference with other cards does not exist. Accordingly, the IC card 2 returns its unique ID (UID) to the card reader 16.

In step 2-6, the card reader 16 adds a number-of-valid-bit NVB that designates a code for card selection to a select SEL to define a card selection command, and issues the card selection command to the non-contact type IC card 2.

In step 2-7, the non-contact type IC card accepts the selection command, and in response, returns a SAK (Select Acknowledge) to the card reader 16.

In step 2-8, the card reader 16 issues a card information obtaining command (Request for ATS) to the non-contact type IC card 2.

In step 2-9, the non-contact type IC card 2 returns its card information (Answer to Select: ATS) to the card reader 16.

In step 2-10, the card reader 16 changes the card information into the same format as that of the answer-to-reset (ATR) issued as a response signal in the case of the activation of a contact type IC card as described above with reference to Fig. 4, and returns the same to the upper level apparatus 11.

By executing a series of the steps described above within the card reader 16, the upper level apparatus 11 can activate the non-contact type IC card by only issuing an activation command in step 2-1 shown in Fig. 8, and can obtain the information in step 2-10 of Fig. 8 that is similar to the one obtained in the case of the activation of a contact type IC card. Accordingly, the upper level apparatus 11 can activate the non-contact type IC card 2 with the same procedure that is employed when a contact type IC card is activated. As a result, the upper level apparatus does not require executing a lengthy activation process, and additional processing functions for the activation of the non-contact type IC card 2 do not require to be installed on the upper level apparatus 11. Also, information can be obtained from the card at the same time as the activation process is executed.

In the command-response flow shown in Fig. 8, communications between the card reader 16 and the non-contact type IC card 2 are accomplished by the electromagnetic coupling between the card reader communication coil 5 provided within the card reader 16 and the non-contact type communication coil 8 provided in the IC card 2.

In the present embodiment, the card reader communication coil 5 may preferably be disposed at the gate section 12 of the card reader that has the card insertion aperture 19 or slightly inside the gate section 12, instead of being disposed in the card reader main body. By disposing the card reader communication coil 5 in the proximity of the card insertion aperture 19, the card reader communication coil 5 and the non-contact type communication coil 3 of the IC card 2 communicate with each other as the IC card 2 is taken into the card reader 16 by the card transfer mechanism 4, and the processing steps shown in Fig. 8 can be conducted according to a specified operation flow that is stored in the operation flow section 87 of the process storage section 21 shown in Fig. 7. As a result, the non-contact type IC card 2 can be activated without having to wait for an activation command from the upper level apparatus 11, and information required for identifying the card can be obtained in advance. In this manner, an activation process is conducted for the non-contact type IC card 2. As a result, the card reader 16 can promptly return the information required for identifying the card to the upper level apparatus 11 in response to an activation command from the upper level apparatus 11. Therefore, the card reader 16 does not move the card 2 after it receives an activation command from the upper level apparatus 11 and then start an activation process.

Next, an IC card reader in accordance with another embodiment of the present invention is described. The IC card reader of the present embodiment is used for a card that employs a contact-type IC card communication method and a non-contact type IC card communication method. The IC card reader can process the IC card at one location when the contact-type IC card communication and the non-contact type IC card communication are conducted, or at two locations with minimal movements of the card between the contact-type IC card communication and the non-contact type IC card communication.

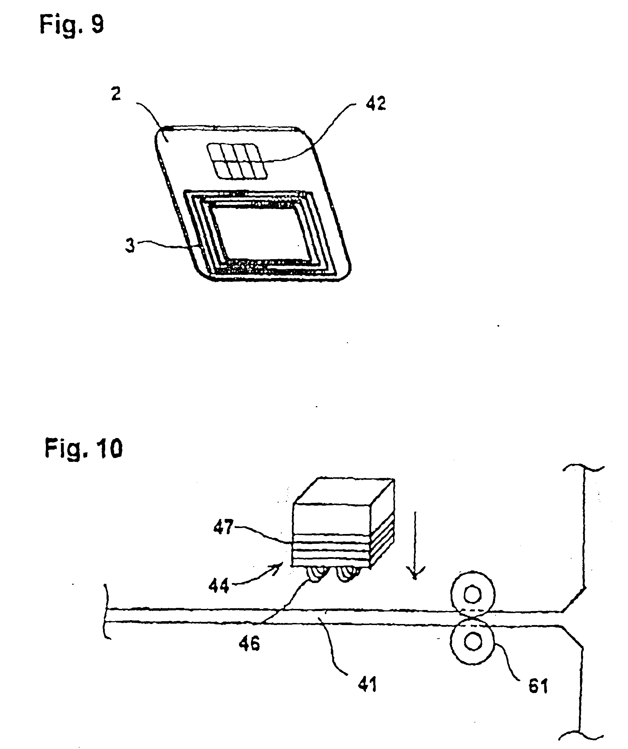

As shown in Fig. 9, the IC card 2 used in the present embodiment has a contact type terminal 42 in addition to the non-contact type communication coil 3.

As shown in Fig. 10, for example, the card reader has a contact type contact block 44 for conducting a contact type communication with the IC card 2, and a card reader communication coil 47 for conducting a non-contact type communication with the IC card 2.

The card reader has a card transfer path 41 and a card transfer mechanism along the card transfer path 41. The card transfer mechanism is equipped with transfer rollers 61 that take in and transfer the IC card 2. The inserted IC card 2 is transferred to a specified position by the card transfer mechanism. At this specified position, the contact type contact block 44 provided within the card reader is lowered in a direction indicated by an arrow, and a contact spring 46 mounted on the contact type contact block 44 is brought in contact with the contact type terminal 42 of the IC card 2 to thereby conduct a contact type communication. Also, a non-contact type communication is conducted by the card reader communication coil 47 and the card reader communication coil 3 of the IC card.

The card reader communication coil 47 is disposed at a location where the communication can be established with the IC card 2 that is transferred by the card transfer mechanism. The contact type contact block 44 is located within a range in which the IC card 2 and the card reader communication coil 47 can communicate with each other, and in a place where the card may be moved with a minimal distance when the contact type communication and the non-contact type communication are switched from one to the other.

In general, when a card reader apparatus takes in a non-contact type IC card, and the IC card is processed by bringing a communication coil of the IC card in close proximity of a communication coil of the card reader, the communication coil of the IC card may preferably have a size generally the same as that of the IC card in view of the communication efficiency.

However, when the IC card and the communication coil have generally the same size, it is difficult to process the IC card at the same location or at locations separated by a minimal distance within the apparatus for the contact type communication and the non-contact type communication. In many instances, the IC card is generally processed at two separated locations substantially far apart from each other in the contact type communication and the non-contact type communication. As a result, an extra time is required to move the IC card between the two locations.

Therefore, in order to process the IC card at the same location or at locations separated by a minimal distance, and to eliminate the extra time to move the IC card, the communication coil may be made smaller than that of the IC card, although this may result in a slightly lowered communication quality.

In accordance with the embodiment of the present invention, the IC card 2 has the non-contact type communication coil 3 for the non-contact type communication that is reduced in size to about one half (1/2) to about one fifth (1/5) of the size of the IC card 2, and juxtaposed to the contact type terminal 42. By reducing the size of the communication coil 3 of the IC card 2, the communication coil 3 can be disposed very close to the contact type terminal 42. As a result, the IC card 2 can be processed at the same location or at locations separated by a minimal distance for the contact type communication and the non-contact type communication.

It is ideal if the IC card 2 is processed at the same location in a contact type communication performed between the contact type terminal 42 of the IC card 2 and the contact type contact block 44 provided within the card reader and in a non-contact type communication performed between the non-contact type communication coil 3 of the IC card 2 and the card reader communication coil 47 provided within the card reader. As a result, the IC card 2 does not have to be moved and the extra process time is not spent.

The contact type contact block 44 and the card reader communication coil 47 may preferably be disposed on the same side with respect to the card transfer path 41 in order to minimize the shift of the IC card when the contact type communication and the non-contact type communication are switched from one to the other. Furthermore, the contact type contact block 44 and the card reader communication coil 47 may be integrally formed in one piece, as shown in Fig. 10. As a result, a compact structure for the contact type contact block 44 and the card reader communication coil 47 is realized.

The contact type contact block 44 shown in Fig. 10 is provided on its lower surface with a plurality of contact springs 46 that define contact pairs. A coil 47 is wound around a contact holder section of the contact type contact block 44 above the contact pairs to form a non-contact type communication coil section.

As described above, by reducing the size of the communication coil compared with the IC card 2, the shift amount of the IC card 2 is eliminated or reduced, and the card reader itself is reduced in size. On the other hand, the communication quality in a non-contact type communication may be slightly lowered. In order to prevent the communication quality from lowering, the following measure may preferably be implemented in accordance with one embodiment of the present invention.

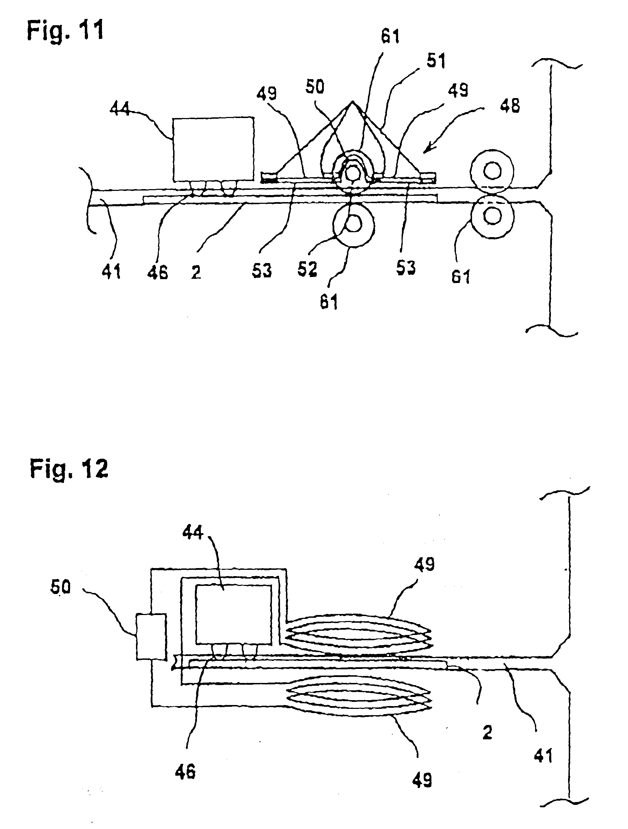

A variety of parts are mounted inside a card reader, and therefore an available space for a non-contact type communication coil is limited. It is difficult to provide a communication coil having an area that is greater than a predetermined area formed by a flat member such as a printed circuit board. However, in order to overcome this difficulty, the card reader communication coil 48 is formed from substrates 53, two divided coils 49 disposed on the substrates 53 and a resilient line member 50 such as a flexible cable that connects the divided coils 49, as shown in Fig. 11. A support member 51 supports the entire structure of the card reader communication coil 48. By this structure, the card reader communication coil 48 can be disposed above the card transfer path while avoiding an obstruction such as a structural member 52 that may be a shaft of the transfer roller 61. Also, a communication coil having a substantially large area can be mounted in the card reader.

In one embodiment, the card reader communication coil 48 may be entirely formed by a resilient material such as a flexible cable.

Furthermore, as shown in Fig. 12, two divided card reader coils 49 connected by a flexible cable 50 for commonly performing a communication may be disposed on both sides of the card transfer path 41 in the card reader. The divided coils 49 are driven to generate magnetic fluxes in a manner that the generated magnetic fluxes have the same phase. As a result, the magnetic flux path becomes controllable. Also, even when a single coil does not have enough area in one plane to provide a good quality communication, such coils can be formed in a manner as shown in Fig. 12 to achieve a required communication quality.

In general, in a non-contact type communication, the coil 49 may be disposed on one side of the IC card 2, a magnetic flux that passes the IC card 2 can be supplied. However, the two divided coils 49 provided on both side of the IC card 2 as shown in Fig. 12 further improve the communication quality.

In other words, the communication quality is determined by the amount of a magnetic flux that passes the IC card in a non-contact type communication. Therefore, the communication quality can be improved by condensing the magnetic fluxes passing through the IC card. It is noted that the magnetic fluxes become controllable when the divided coils 49 have the same phase.

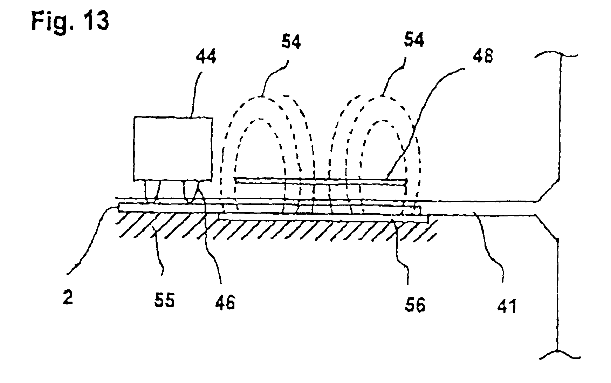

If the card transfer path 41 that opposes to the coil 48 in a non-contact type communication position within the card reader apparatus shown in Fig. 13 is formed from a metal member 55, the magnetic flux from the coil 48 is absorbed by the metal member 55, and therefore a closed magnetic path is not formed. Accordingly, it is difficult to obtain a required communication quality in a non-contact type communication. In accordance with the present embodiment, a high magnetic permeability member 56 such as a ferrite material is provided between the IC card 2 and the metal member 55. By this structure, the magnetic flux 54 generated by the coil 48 passes the high magnetic permeability member 56 and can avoid the influence of the metal member 55. As a result, a high communication quality is achieved.

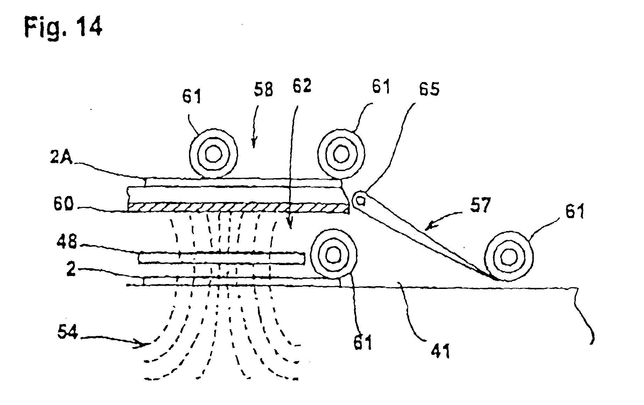

In the embodiment described above, one IC card 2 is inserted in the card reader 1. However, as shown in Fig. 14, a refuge section 58 may also be provided within the card reader in addition to the card transfer path 41 that transfers the IC card 2. An IC card 2A that is to be processed later can be temporarily placed in the refuge section 58. In this case, a branch section is provided in the card transfer path 41 to transfer the IC card 2A to the card refuge section 58. The branch section may have a refuge flap 57 with a wedge shaped tip portion that is rotatable about a pivot shaft 65.

If a non-contact type communication between the non-contact type communication coil 48 and the IC card 2 is conducted while the IC card 2A that is not subject to the process is retained in the card refuge section 58, both of the IC card 2 in a non-contact type communication region 62 and the IC card 2A in the card refuge section 58 may respond. In order to prevent this problem, an electromagnetic shield section 60 may preferably be provided between the non-contact type communication region 62 and the card refuge section 58 in order to shut out the electromagnetic wave. The electromagnetic shield section 60 may be provided by an electromagnetic shield member affixed to the apparatus frame or an electromagnetic shield paint coated on the apparatus frame. When the card reader has a storage section for storing may cards, an electromagnetic shield section similar to the electromagnetic shield section 60 may preferably be formed between a non-contact type communication region and the card storage section.

Also, as shown in Fig. 1, the IC card 2 that is inserted in the apparatus main body 16 passes the non-contact type communication region provided by the card reader communication coil 5, and is further transferred to a position indicated by a broken line. Therefore, while the IC card 2 is transferred by the card transfer mechanism from the card insertion aperture to the predetermined card stop position, a data communication may be conducted between the IC card 2 and the card reader communication coil 5, and a communication result may be stored in the memory section. Later, in response to a data communication request from the upper level apparatus, the data stored in the memory section may be transferred to the upper level apparatus. In this instance, a position detection sensor or the like is used to detect if the IC card 2 is in a communication region where the IC card 2 can communicate with the card reader communication coil 5, and a data communication may be conducted when the IC card 2 is in the communication range.

It is clear from the above that, in an IC card reader in accordance with the present invention, at least one of an IC card having a non-contact type communication coil and a card reader communication coil provided on the card reader is moved to adjust their relative position to improve the communication quality. As a result, a magnetic coupling position that achieves a high degree of magnetic coupling for each individual IC card can be secured, and the communication quality can be improved by conducting a data communication in such a magnetic coupling position.

Also, when a variety of different IC cards are handled by the IC card reader, the IC cards are positioned such that a magnetic coupling designated area on each of the IC cards is placed in a communication coupling region of the IC card reader. As a result, a high level of magnetic coupling is formed.

Also, in the IC card reader in accordance with the present invention, when a non-contact type communication between the non-contact type communication coil of the IC card and the card reader communication coil on the card reader is in error, the IC card or the card reader communication coil is moved in a direction that improves the communication condition. As a result, after the communication condition is improved, a communication recovery measure to restart a data communication can be taken. Accordingly, the IC card reader can properly cope with errors that may be caused by the individual IC cards, respectively.

Also, in accordance with the present invention, the IC card reader has a process memory section that stores a processing procedure to be initially executed for an IC card equipped with a non-contact type communication coil, converts a processing result obtained according to the processing procedure into the same format as that of a response result that is issued in the case of a contact type IC card, and transmits the processing result to the upper level apparatus. The process memory section performs a data communication between the card reader communication coil with an IC card according to the processing procedure, converts a processing result obtained according to the processing procedure into the same format as that of a response result that is issued in the case of a contact type IC card, and transmits the processing result to the upper level apparatus. As a result, the upper level apparatus can activate a non-contact type IC card by only issuing an activation command to the card reader, and can obtain data similar to the one obtained in the case of an activation of a contact-type IC card. Accordingly, the upper level apparatus can activate a non-contact type IC card with the same procedure that is used for activation of a contact-type IC card. Therefore, the upper level apparatus does not require performing a lengthy activation process, and does not need to have additional processing functions for the activation of a non-contact type IC card.

In a preferred embodiment, a card transfer mechanism may be provided in the card reader to take in transfer an IC card in the card reader. When the IC card is taken in through a card insertion aperture by the card transfer mechanism, a data communication can be conducted according to the processing procedure stored in the process memory section, and its result may be stored in the process memory section. Accordingly, the non-contact type IC card can be activated when the IC card is taken in the card reader by the card transfer mechanism.

Also, in accordance with the present invention, the IC card reader has a card transfer mechanism that takes in and transfers an IC card equipped with a contact type terminal and a non-contact type communication coil. The IC card reader communicates data with the IC card by using a contact type contact block or a card reader communication coil provided in the IC card reader. The card reader communication coil is located at a position where the card reader communication coil can communicate with the IC card that is transferred by the card transfer mechanism. Also, the contact type contact block is located in a range in which the IC card and the card reader communication coil can communicated with each other and at a position where the IC card needs a least movement when the communication method is switched between a contact type communication and a non-contact type communication. As a result, the IC card reader that requires a short processing time is obtained.

While the description above refers to particular embodiments of the present invention, it will be understood that many modifications may be made without departing from the spirit thereof. The accompanying claims are intended to cover such modifications as would fall within the true scope and spirit of the present invention.

The presently disclosed embodiments are therefore to be considered in all respects as illustrative and not restrictive, the scope of the invention being indicated by the appended claims, rather than the foregoing description, and all changes which come within the meaning and range of equivalency of the claims are therefore intended to be embraced therein.

## Claims

1. An IC card reader for communicating with an IC card equipped with a non-contact type communication coil, the IC card reader comprising:
a card transfer mechanism for transferring the IC card;
a card reader communication coil for communicating with the non-contact type communication coil of the IC card;
a position adjusting mechanism for adjusting positions of at least one of the IC card and the card reader communication coil;
a position adjusting driver device for driving the position adjusting mechanism; and
a position adjusting control device that controls the position adjusting driver device and the position adjusting mechanism and determines a position that provides a specified communication quality based on an output signal from the card reader communication coil.

2. An IC card reader according to claim 1, wherein the position adjusting control device confirms if there is a response from an IC card based on an output signal from the card reader communication coil, and performs a data communication when the response is confirmed, and wherein the position adjusting mechanism changes a relative position between the IC card and the card reader communication coil by a specified amount when the response is not confirmed.

3. An IC card reader according to claim 2, further comprising a process memory unit that stores a communication process procedure to be initially executed for the IC card such that the card reader communication coil performs a communication of data to the IC card according to the communication process procedure, converts a process result obtained through execution of the communication process procedure into a format identical with a response result of a contact type IC card, and transmits the process result to an upper level apparatus.

4. An IC card reader according to claim 2, wherein the IC card has a contact type terminal adjacent to the non-contact type communication coil, the IC card reader further comprising a contact block that is brought in contact with the contact type terminal of the IC card for a data communication, wherein the contact block is disposed within a communication range in which the card reader communication coil communicates with the IC card and at a location where a movement of the IC card is minimal when a contact type communication and a non-contact type communication are switched from one to the other.

5. An IC card reader according to claim 4, wherein a position of the IC card when the contact type terminal of the IC card and the contact block are in a contact type communication and a position of the IC card when the non-contact type communication coil of the IC card and the card reader communication coil are in a non-contact type communication are identical with each other.

6. An IC card reader according to claim 1, wherein the position adjusting control device stores calling levels and response levels of the IC card while changing a relative position between the IC card and the card reader communication coil by a specified amount at a plurality of locations, and determines the position of the IC card by detecting output signals from the card reader communication coil.

7. An IC card reader according to claim 6, further comprising a process memory unit that stores a communication process procedure to be initially executed for the IC card such that the card reader communication coil establishes a communication of data to the IC card according to the communication process procedure, converts a process result obtained through execution of the communication process procedure into a format identical with a response result of a contact type IC card, and transmits the process result to an upper level apparatus.

8. An IC card reader according to claim 6, wherein the IC card has a contact type terminal adjacent to the non-contact type communication coil, the IC card reader further comprising a contact block that is brought in contact with the contact type terminal of the IC card for a data communication, wherein the contact block is disposed within a communication range in which the card reader communication coil communicates with the IC card and at a location where a movement of the IC card is minimal when a contact type communication and a non-contact type communication are switched from one to the other.

9. An IC card reader according to claim 1, wherein the position adjusting mechanism includes the card transfer device, and the position adjusting driver device uses a driving source that drives the card transfer device.

10. An IC card reader for communicating with an IC card equipped with a non-contact type communication coil, the IC card reader comprising:
a card transfer mechanism for transferring the IC card;
a card reader communication coil for communicating with the non-contact type communication coil of the IC card;
a position adjusting mechanism for adjusting positions of at least one of the IC card and the card reader communication coil;
a position adjusting driver device for driving the position adjusting mechanism; and
a position adjusting control device that controls the position adjusting driver device and the position adjusting mechanism and moves one of the IC card and the card reader communication coil in a direction that improves a communication condition when a non-contact type communication between the non-contact type communication coil and the card reader communication coil is in error.

11. An IC card reader according to claim 10, wherein the position adjusting control device has a memory section that stores data for the direction and the moving amounts.

12. An IC card reader according to claim 11, further comprising a process memory unit that stores a communication process procedure to be initially executed for the IC card such that the card reader communication coil establishes a communication of data to the IC card according to the communication process procedure, converts a process result obtained through execution of the communication process procedure into a format identical with a response result of a contact type IC card, and transmits the process result to an upper level apparatus.

13. An IC card reader according to claim 11, wherein the IC card has a contact type terminal adjacent to the non-contact type communication coil, the IC card reader further comprising a contact block that is brought in contact with the contact type terminal of the IC card for a data communication, wherein the contact block is disposed within a communication range in which the card reader communication coil communicates with the IC card and at a location where a movement of the IC card is minimal when a contact type communication and a non-contact type communication are switched from one to the other.

14. An IC card reader for communicating with an IC card equipped with a non-contact type communication coil, the IC card reader comprising:
a card reader communication coil for communicating with the non-contact type communication coil of the IC card; and
a process memory unit that stores a communication process procedure to be initially executed for the IC card, wherein the card reader communication coil establishes a communication of data to the IC card according to the communication process procedure, converts a process result obtained through execution of the communication process procedure into a format identical with a response result of a contact type IC card, and transmits the process result to an upper level apparatus.

15. An IC card reader according to claim 14, wherein the process memory unit includes a first conversion section that converts an activation command for a contact type IC card provided from an upper level unit into an activation command for a non-contact type IC card, a second conversion section that converts a response result of a non-contact type IC card into a response result of a contact type IC card, and an operation flow section that stores a communication process procedure to be initially executed for an IC card equipped with a non-contact type communication coil.

16. An IC card reader according to claim 15, further comprising a card transfer mechanism for transferring the IC card, wherein a data communication is executed according to the communication process procedure stored in the process memory unit, and a result thereof is stored in the process memory unit while the IC card is transferred by the card transfer mechanism from a card insertion opening to an interior of the IC card reader.

17. An IC card reader according to claim 15, wherein the IC card has a contact type terminal adjacent to the non-contact type communication coil, the IC card reader further comprising a contact block that is brought in contact with the contact type terminal of the IC card for a data communication, wherein the contact block is disposed within a communication range in which the card reader communication coil communicates with the IC card and at a location where a movement of the IC card is minimal when a contact type communication and a non-contact type communication are switched from one to the other.

18. An IC card reader for communicating with an IC card equipped with a non-contact type communication coil and a contact type terminal, the IC card reader comprising:
a card transfer mechanism for transferring the IC card;
a card reader communication coil for communicating with the non-contact type communication coil of the IC card; and
a contact type contact block that is brought in contact with the contact type terminal of the IC card for a data communication, wherein the contact type contact block is disposed within a communication range in which the card reader communication coil can communicated with the IC card, and the contact type contact block is disposed at a location where a movement of the IC card is minimal when a contact type communication and a non-contact type communication are switched from one to the other.

19. An IC card reader according to claim 18, wherein a position of the IC card when the contact type terminal of the IC card and the contact block provided in the IC card reader are in a contact type communication and a position of the IC card when the non-contact type communication coil of the IC card and the card reader communication coil provided in the IC card reader are in a non-contact type communication are identical with each other.

20. An IC card reader according to claim 18, wherein the contact block and the card reader communication coil are integrally formed in one piece.

21. An IC card reader according to claim 18, wherein the card reader communication coil has two divided coil sections and a flexible circuit substrate connecting the two divided coil sections, wherein the two divided coil sections are disposed on both sides of a card transfer shaft of the card transfer mechanism, and are connected by the flexible circuit substrate in a manner to avoid the card transfer shaft.

22. An IC card reader according to claim 18, wherein the card reader communication coil is disposed on each side of a card transfer path, and the card reader communication coils are driven to generate magnetic fluxes having an identical phase.

23. An IC card reader according to claim 18, wherein the card transfer path that is opposite to the card reader communication coil in the non-contact type communication position is formed from a metal material, and a material of a high magnetic permeability for passing magnetic fluxes of the card reader communication coil is provided on the metal material.

24. A method for communication between a card reader communication coil of an IC card reader and an IC card equipped with a non-contact type communication coil, the method comprising the steps of
transferring the IC card to a first stop position within the IC card reader;
communicating between the card reader communication coil on the IC card reader with the non-contact type communication coil of the IC card;
determining if the IC card at the first stop position provides a specified communication quality level;
adjusting positions of at least one of the IC card and the card reader communication coil when the specified communication quality level is not attained; and
determining a communication position that provides the specified communication quality based on an output signal from the card reader communication coil.

25. A method for communication according to claim 24, further comprising the steps of confirming if there is a response from the IC card based on an output signal from the card reader communication coil, and performing a data communication when the response is confirmed, wherein a relative position between the IC card and the card reader communication coil is changed by a specified amount when the response is not confirmed.

26. A method for communication according to claim 24, further comprising the steps of storing a communication process procedure to be initially executed for the IC card such that the card reader communication coil performs a communication of data to the IC card according to the communication process procedure, converting a process result obtained through execution of the communication process procedure into a format identical with a response result of a contact type IC card, and transmitting the process result to an upper level apparatus.

27. A method for communication according to claim 24, further comprising the steps of storing calling levels and response levels of the IC card while changing a relative position between the IC card and the card reader communication coil by a specified amount at a plurality of locations, and determining the position of the IC card by detecting output signals from the card reader communication coil.
